# EUROPÄISCHE PATENTSCHRIFT

(11) **EP 3 976 338 B1**
(45) Veröffentlichungstag und Bekanntmachung des Hinweises auf die Patenterteilung: **25.09.2024**
(21) Anmeldenummer: 19729229.5
(22) Anmeldetag: 03.06.2019
(51) Int. Cl.: B29C 48/90, B29C 48/10, B29C 55/28

(54) **VORRICHTUNG ZUM FÜHREN EINES FOLIENSCHLAUCHS**
APPARATUS FOR GUIDING A FILM TUBE
DISPOSITIF DE GUIDAGE D'UN FILM TUBULAIRE

(43) Veröffentlichungstag der Anmeldung: 06.04.2022
(73) Patentinhaber: Kdesign GmbH, 53639 Königswinter (DE)
(72) Erfinder: ZIMMERMANN, Richard, 53721 Siegburg (DE)
(74) Vertreter: Neumann Müller Oberwalleney Patentanwälte PartG mbB
(86) Internationale Anmeldenummer: PCT/EP2019/064386
(87) Internationale Veröffentlichungsnummer: WO 2020/244737

(56) Entgegenhaltungen:
- EP-A1- 1 714 770
- EP-A1- 2 662 197
- EP-A2- 1 967 350
- WO-A1-2016/139573
- JP-U- S5 961 916
- US-A- 3 980 418

## Beschreibung

Die Erfindung betrifft eine Vorrichtung zum Führen eines aus einem Folienblaskopf austretenden, in einer Produktionsrichtung abgezogenen Folienschlauchs, mit einem Rahmen, durch den der Folienschlauch in Produktionsrichtung hindurchführbar ist, und mehreren über den Umfang verteilt angeordnete Verstelleinheiten zum Verstellen von Folienführungselementen quer zur Produktionsrichtung. Die Verstelleinheiten weisen jeweils einen Schwenkarm, der am Rahmen schwenkbar befestigt ist, einen Träger für zumindest eines der Folienführungselemente, der mit dem Schwenkarm schwenkbar verbunden ist, und eine Koppelstange, die mit dem Träger schwenkbar verbunden ist, auf.

Bei dem Herstellungsverfahren eines Folienschlauchs wird Kunststoffschmelze aus einem Extrusionswerkzeug mit Ringkanaldüse extrudiert und ausgezogen. Der plastifizierte, plastisch formbare und expandierbare heiße Folienschlauch wird unmittelbar nach dem Austritt aus dem Ringkanal am äußeren und häufig auch am inneren Umfang mit Kühlluft aus einem Kühlring bzw. einer Innenkühleinrichtung angeblasen und abgekühlt. Die Schlauchfolienblase wird in Längsrichtung über eine Vorrichtung zum Führen des Folienschlauchs (häufig auch als Führungsvorrichtung, Kalibriervorrichtung oder Kalibrierkorb bezeichnet) und eine Flachlegeeinrichtung geführt und in einer Abzugseinheit als Flachschlauch von Förderwalzen abgequetscht und abgezogen. Das sogenannte Einfrieren des Folienschlauchs, d. h. der Übergang der Kunststoffschmelze des Folienschlauchs von einem plastifiziertem und expandierbaren Zustand zu einem nicht mehr expandierbaren Zustand, erfolgt in der Regel dicht unterhalb der Kalibriervorrichtung. Die Kalibriervorrichtung weist über den Umfang verteilt angeordnete Folienführungselemente auf, die zum Führen des Folienschlauchs dienen. Die Folienführungselemente können beispielsweise Laufrollen aufweisen, die tangential an dem Folienschlauch anliegen und diesen führen. Die Folienführungselemente sind quer zu einer Produktionsrichtung des Folienschlauchs radialverstellbar und somit an unterschiedliche Durchmesser des Folienschlauchs anpassbaren.

Eine Vorrichtung der eingangs genannten Art ist aus der EP 1 967 350 A2 bekannt. Die dort beschriebene Führungsvorrichtung weist eine Trägerstruktur auf, an der mehrere bewegliche Arme schwenkbar befestigt sind. Die Arme tragen Führungsmittel, die in Kontakt mit dem Folienschlauch gehalten werden. Die bewegliche Arme bestehen aus einem gelenkigen Viereck und umfassen jeweils einen viereckigen Körper, der klappenähnlich an der Trägerstruktur schwenkbar angebracht ist, eine Gelenkstange, die mit einem Ende an der Trägerstruktur drehbar angebracht ist, und ein Trägerelement für die Führungsmittel, das an dem anderen Ende der Gelenkstange drehbar angebracht ist. Die beweglichen Arme sind derart angeordnet, dass die Führungsmittel immer tangential zum Folienschlauch gehalten werden. Die beweglichen Arme, die Gelenksstangen und die Trägerelemente sind jeweils derart an der Trägerstruktur und untereinander befestigt, dass sie eine trapezförmige Anordnung in der Art eines viergliedrigen Drehgelenkgetriebes bilden.

Verbindungsmittel, die die Gelenkstange mit dem Trägerelement verbinden, beschreiben beim Verstellen einen Kreisbogen um dasjenige Ende der Gelenkstange, das an der Trägerstruktur drehbar angebracht ist. Durch diese Anordnung werden Führungsmittel in Form von horizontal angeordneten drehbaren Laufrollen zwar tangential an den Folienschlauch gehalten. Die Positionierung der Laufrollen ist hierbei jedoch nur annähernd zentrisch zur Folienblase.

Aus dem Stand der Technik sind ferner grundsätzlich berührende und berührungslose Kalibrier- und Führungsvorrichtungen bekannt, deren Folienführungselemente über verschiedenartige Verstelleinheiten an den jeweiligen Durchmesser des Folienschlauchs angepasst werden. Damit eine stufenlose Durchmesserverstellung möglich ist, sind die Folienführungselemente nach dem Stand der Technik auf dem Umfang in Kalibriersegmente aufgeteilt. Zur Durchmesserverstellung sind im Wesentlichen Schwenkarmmechanismen mit tangentialer Anschwenkung der Folienführungselemente und Hebel- bzw. Scheren-Mechanismen mit radial zentrischer Anstellung der Folienführungselemente bekannt.

Scherenmechanismen, wie beispielsweise nach EP 1 714 770 B1 oder EP 1 491 319 B1, ermöglichen zwar eine radial zentrische Verstellung der Kalibriersegmente. Die indirekte lineare Stellbewegung unterliegt dabei aber bei konstanter Antriebsdrehzahl einer permanenten Änderung der Stellgeschwindigkeit, was speziell bei modernen Anlagen mit automatischer Ansteuerung der Durchmesserverstellung zu einem erhöhten Steuerungsaufwand führt.

Darüber hinaus sind Bauformen bekannt, bei denen Merkmale beider Systeme kombiniert werden, um bei einem Schwenkarmprinzip eine zentrische Anstellung über zusätzlich beischwenkbare Folienführungselemente zu ermöglichen, wie zum Beispiel in EP 1 967 350 B1, EP 1 965 965 B1, EP 2 662 197 B1, US 3 980 418 A, WO 2007/079899 A1 und WO 2016/139573 A1 gezeigt.

Eine Kalibriervorrichtung mit berührungslosen Folienführungselementen zeigt EP 2 801 467 B1. Dabei wird der Venturi- bzw. Bernoulli-Effekt genutzt, durch den eine mit ausreichender Geschwindigkeit tangential entlang einer der Schlauchfolie zugewandten Fläche des Führungselementes geführte Luftströmung eine ansaugende und fixierende Kraft auf ein ausreichend nah befindliches bewegliches Element, in diesem Fall die Schlauchfolie ausübt, ohne dass es zu einem berührenden Kontakt kommt. Die Schlauchfolie nimmt durch diese Kraft in Verbindung mit dem Luftpolster als Gegenkraft eine stabile Abstandsposition zum Folienführungselement ein. Die Folienführungselemente mit berührungsloser Luftpolsterführung können sowohl in Produktionsrichtung parallel beabstandet angeordnete Einzelelemente sein, als auch höhenversetzt gekreuzte Paare von Elementen in V-Stellung sein, die in Produktionsrichtung parallel beabstandet angeordnet sind.

Alle bekannten Bauformen weisen eine mechanische Synchronisation der am Umfang angeordneten Kalibriersegmente auf. Die Ausführungen nach WO 2007/079899 A1 und WO 2016/139573 A1 haben eine direkte Kopplung der zusätzlich beischwenkbaren Folienführungselemente der jeweiligen Kalibriersegmente gemeinsam. Die dabei verwendeten Koppelelemente sind in einer Ebene teleskopierbar oder klappbar und in einer anderen Ebene starr und sorgen über den Verstellweg für eine gemeinsame tangentiale und zentrische Ausrichtung der Folienführungselemente zum Folienschlauch.

Die Koppelelemente weisen keine Verbindung zum äußeren starren Rahmen auf. Daher ist diese Ausführungsform bei größeren Bauformen schwierig beherrschbar und neigt zu Ungenauigkeit bei der Positionierung der Folienführungselemente zum Folienschlauch und zum Verkanten.

Aufgabe der vorliegenden Erfindung ist es, eine Vorrichtung zum Führen eines aus einem Folienblaskopf austretenden, in einer Produktionsrichtung abgezogenen Folienschlauchs bereitzustellen, bei der Folienführungselemente möglichst präzise bei einer Änderung des Durchmessers des Folienschlauchs an diesen positioniert werden.

Die Aufgabe wird durch eine Vorrichtung zum Führen eines aus einem Folienblaskopf austretenden, in einer Produktionsrichtung abgezogenen Folienschlauchs, mit den Merkmalen des Anspruchs 1 gelöst.

Die durchmesserverstellbare Vorrichtung zum Führen des Folienschlauchs (Kalibrier- und Führungsvorrichtung) gemäß der Erfindung ermöglicht bei geringem baulichen Aufwand für jeden Durchmesser des Folienschlauchs eine präzise zentrische Anstellung der Folienführungselemente an den Folienschlauch. Hierzu dient insbesondere der Stellmechanismus, der zwischen der Koppelstange und dem Rahmen angeordnet ist und die Koppelstange mit dem Rahmen gelenkig verbindet.

Durch die Anordnung des Stellmechanismus zwischen der Koppelstange und dem Rahmen lässt sich die Verstellung der Folienführungselemente relativ zum Folienschlauch präziser vorgeben, als dies beim Stand der Technik mit lediglich einer trapezförmige Anordnung der Verstelleinheit möglich ist.

Die Koppelstange führt hierbei an dem mit dem Träger verbundenen Ende und an dem mit dem Stellmechanismus verbundenen Ende jeweils translatorische Bewegungen aus, die nicht deckungsgleich sind bzw. nicht deckungsgleiche Bewegungsvektoren aufweisen.

Die Koppelstangen können einfache Stangen mit rundem, quadratischem oder rechteckigem Querschnitt sein. Sie können aber auch komplexer ausgeführt werden zum Beispiel als Frästeile, Drehteile, Stanzteile, Metallgussteile, Metallpressteile, Spritzgussteile, ausgelaserte Blechteile oder Blechkantteile.

Die zumindest eine erste Verstelleinheit bildet ein ungleichmäßig übersetzendes Übertragungsgetriebe, nämlich ein Koppelgetriebe oder ein Kurvengetriebe. Diese beiden Getriebearten bieten die meisten Möglichkeiten an Strukturen und Eigenschaften, um eine präzise Ausrichtung der Folienführungselemente gegenüber dem Folienschlauch zu gewährleisten.

In einer beispielhaften Ausgestaltung kann die zumindest eine erste Verstelleinheit ein sechsgliedriges Koppelgetriebe bilden. Hierbei ist die Komplexität des Getriebeaufbaus verhältnismäßig gering wobei eine hohe Präzision der Bewegungsabläufe und Anpassbarkeit an unterschiedliche Rahmenbedingungen ermöglicht wird. Das Koppelgetriebe kann hierbei insbesondere als Stephensonsche Kette ausgebildet sein.

Der Stellmechanismus kann mit drei Elementen gekoppelt sein, nämlich mit dem Schwenkarm der zumindest einen ersten Verstelleinheit, mit der Koppelstange der zumindest einen ersten Verstelleinheit und mit dem Rahmen.

Der Stellmechanismus kann ein Koppelelement aufweisen, das einerseits mit der Koppelstange der zumindest einen ersten Verstelleinheit und andererseits mit dem Rahmen jeweils gelenkig verbunden ist. "Gelenkig" bedeutet in diesem Zusammenhang, dass das Koppelelement jeweils mittels eines Drehgelenks für eine schwenkbare Verbindung, mittels eines Schubgelenks für eine verschiebbare Verbindung oder einer Kombination aus beidem mit der Koppelstange und dem Rahmen verbunden ist.

In einer beispielhaften Ausgestaltung ist das Koppelelement mit der Koppelstange der zumindest einen ersten Verstelleinheit schwenkbar verbunden.

Der Stellmechanismus kann ferner einen Verbindungshebel aufweisen, der einerseits mit dem Schwenkarm der zumindest einen ersten Verstelleinheit und andererseits mit dem Koppelelement der zumindest einen ersten Verstelleinheit schwenkbar verbunden ist. Alternativ ist es auch möglich, dass der Verbindungshebel anstatt mit dem Koppelelement mit der Koppelstange schwenkbar verbunden ist.

Der Schwenkarm umfasst hierbei alle starr miteinander verbundenen Bauteile, die gleichförmig bewegt bzw. geschwenkt werden, insbesondere eine außerhalb einer Schwenkachse, um die der Schwenkarm am Rahmen schwenkbar befestigt ist, angeordnete Schwenkplatte zur Verbindung mit einem Antrieb.

In einer weiteren beispielhaften Ausgestaltung kann das Koppelelement einerseits mit der Koppelstange der zumindest einen ersten Verstelleinheit verschiebbar und andererseits mit dem Rahmen schwenkbar verbunden sein.

Hierbei kann der Stellmechanismus einen Kurvenführungsmechanismus mit einer Führung und einem Mitnehmer aufweisen, wobei die Koppelstange über den Kurvenführungsmechanismus mit dem Rahmen oder dem Schwenkarm gekoppelt ist und wobei der Mitnehmer entlang der Führung translatorisch bewegbar geführt ist.

Der Mitnehmer kann an einem Element der Gruppe bestehend aus der Koppelstange und dem Rahmen und die Führung an dem anderen Element der Gruppe bestehend aus der Koppelstange und dem Rahmen angeordnet sein. Alternativ kann auch der Mitnehmer an einem Element der Gruppe bestehend aus der Koppelstange und dem Schwenkarm und die Führung an dem anderen Element der Gruppe bestehend aus der Koppelstange und dem Schwenkarm angeordnet sein.

In beispielhafter Ausgestaltung kann der Mitnehmer mit der Koppelstange verbunden sein und die Führung am Rahmen angeordnet sein. Der Mitnehmer kann hierbei fest mit der Koppelstange verbunden sein oder als Schiebeelement ausgebildet sein, dass mit der Koppelstange schwenkbar oder drehbar verbunden ist. Der Mitnehmer kann ein einfacher Bolzen, eine Passschraube oder auch ein abrollendes Element wie beispielsweise ein Kugellager oder eine drehbar gelagerte Hülse sein. Natürlich kann der Mitnehmer bei einer komplexeren Ausführung der Koppelstange auch in die Koppelstange eingearbeitet sein.

Die Führung kann hierbei eine kurvenförmige Laufbahn, zum Beispiel als Kurvenscheibe oder kurvenförmige Nut, ausgebildet sein.

Die Führung, zum Beispiel in Form einer Kurvenscheibe, kann beispielsweise mittelbar oder unmittelbar am starren Rahmen angebaut sein. Die Kurvenscheibe kann auch Teil des starren Rahmens sein, d.h. die Laufbahn ist direkt in den starren Rahmen eingearbeitet.

Es kann aber auch vorgesehen sein, dass die Führung bzw. die Kurvenscheibe am jeweiligen Schwenkarm eines der Verstelleinheiten angebaut ist bzw. Teil des Schwenkarm ist, d.h. die Laufbahn ist direkt in den Schwenkarm eingearbeitet.

Wie bereits oben erläutert, gehört zum Schwenkarm auch eine außerhalb der Schwenkachse liegende Schwenkplatte zum Antreiben des Schwenkarms. Dabei ist es denkbar, dass die Laufbahn direkt in die Schwenkplatte eingearbeitet ist und die Schwenkplatte als Kurvenscheibe dient.

Das Koppelelement kann Bestandteil eines Schubgelenks sein, das mittelbar oder unmittelbar am starren Rahmen drehbar angebaut ist. Ein vorderes Ende der Koppelstange ist mittelbar oder unmittelbar mit den beischwenkbaren Trägern für die Folienführungselemente verbunden und ein hinteres Ende der Koppelstange ist verschiebbar am Schubgelenk geführt.

Vor oder hinter dem Schubgelenk kann die Koppelstange einen Mitnehmer aufweisen, der in die Laufbahn der zugehörigen Führung bzw. Kurvenscheibe greift und darin zwangsgeführt wird.

Die vorgenannten Bauformen können alle auch derart in ihrer Anordnung umgekehrt werden, dass vor oder hinter dem Schubgelenk an der Koppelstange anstelle des Mitnehmers eine Kurvenscheibe angebaut wird. Die Kurvenscheibe kann bei einer komplexeren Ausführung der Koppelstange auch Teil der Koppelstange sein, d.h. die Laufbahn ist direkt in die Koppelstange eingearbeitet.

Der in die Laufbahn der Kurvenscheibe greifende Mitnehmer ist dann am starren Rahmen oder am jeweiligen Schwenkarm der Verstelleinheit angebaut bzw. eingearbeitet.

Bei einer Durchmesserverstellung der Kalibrier- und Führungsvorrichtung über die Schwenkarme der Verstelleinheit verändert sich der Winkel zwischen den Schwenkarmen und den zugehörigen Koppelstangen. Dadurch bewegt sich der Mitnehmer innerhalb der Laufbahn der Kurvenscheibe, oder bei umgekehrter Anordnung die Laufbahn der Kurvenscheibe entlang des Mitnehmers, sodass genau die für den angefahrenen Durchmesser notwendige Verschiebung der Koppelstange in Achsrichtung für eine exakt zentrische Ausrichtung der Folienführungselemente zum Folienschlauch erzeugt wird. Dabei verändert sich über den Verstellweg der Abstand vom vorderen Ende der Koppelstange bis zum drehbaren Schubgelenk. Das vordere Ende ist hierbei das mit dem Träger verbundene Ende der Koppelstange.

Die Form der Laufbahn wird dabei so gestaltet, dass sich für jeden beliebigen Durchmesser der Kalibrier- und Führungsvorrichtung exakt der passende Schwenkwinkel für die Träger der Folienführungselemente einstellt.

Die Vorrichtung kann ferner einen Synchronisationsmechanismus aufweisen, über den zur Synchronisation der Verstellbewegungen die Verstelleinheiten miteinander gekoppelt sind.

Hierbei kann der Synchronisationsmechanismus Schubstangen aufweisen, über die die Verstelleinheiten über den Umfang der Vorrichtung umlaufend miteinander gekoppelt sind.

Es kann vorgesehen sein, dass zumindest eine zweite Verstelleinheit der mehreren Verstelleinheiten ein Koppelelement aufweist, das einerseits mit der Koppelstange der zumindest einen zweiten Verstelleinheit und andererseits mit dem Rahmen gelenkig verbunden ist und im Übrigen frei von einer unmittelbaren Kopplung mit dem jeweiligen Stellarm ist. Hierbei kann der Synchronisationsmechanismus Schubstangen aufweisen, über die die Koppelelemente über den Umfang der Vorrichtung umlaufend miteinander gekoppelt sind.

In einer Ausführungsform sind die an dem starren Rahmen angelenkten Schwenkarme für einen synchronen Schwenkvorgang miteinander umlaufend gekoppelt. Die gekoppelten Schwenkarme werden von einem gemeinsamen Antrieb bewegt, der einen linear oder rotatorisch wirkenden Stellaktor aufweist. Die umlaufende Kopplung wird vorzugsweise über ein einfaches und robustes Schubstangensystem gebildet. Es sind aber auch andere umlaufende Kopplungen wie beispielsweise ein Ketten- oder Zahnriementrieb denkbar. Das umlaufende Koppelsystem der Schwenkarme bildet zusammen mit dem Antrieb bzw. dem Stellaktor ein erstes bewegliches Stellsystem und realisiert die Durchmesserverstellung der Kalibrier- und Führungsvorrichtung. Ein zweites bewegliches Stellsystem dient zur durchmesserabhängigen Beischwenkung der Träger für die Folienführungselemente. Die Träger sind am freien Ende der Schwenkarme angebaut und um eine Schwenkachse parallel zur Produktionsrichtung drehbar gelagert.

In einer abgewandelten Form erfolgt die Kopplung des ersten und zweiten beweglichen Stellsystems mittels des Stellmechanismus nur an einem der Schwenkarme und es werden zusätzlich die Koppelstangen untereinander umlaufend, zum Beispiel mittels Schubstangen, mechanisch synchron gekoppelt. Natürlich sind auch andere Kombinationen denkbar, beispielsweise die Kopplung mittels eines Stellmechanismus an jedem zweiten oder dritten der Schwenkarme mit einer synchronen mechanischen Kopplung der dazwischenliegenden Koppelstangen untereinander.

Bei einer beispielhaften Ausführungsform ist das Antriebskonzept auch dahingehend umkehrbar, dass der linear oder rotatorisch wirkende Stellaktor Teil des zweiten beweglichen Stellsystems ist. Dabei ist aber bei konstanter Stellgeschwindigkeit des Stellaktors die sich ergebende Verstellgeschwindigkeit des Durchmessers nicht konstant. Ist eine konstante Verstellgeschwindigkeit gewünscht, zum Beispiel bei Anlagen mit in Regelkreisen automatisierter Durchmesserverstellung der Kalibrier- und Führungsvorrichtung, muss die Stellgeschwindigkeit des Aktors über den Durchmesser variiert werden.

Die Folienführungselemente können sowohl in Produktionsrichtung parallel beabstandet angeordnete Einzelelemente aufweisen, als auch höhenversetzt gekreuzte Paare von Elementen in V-Stellung, die in Produktionsrichtung parallel beabstandet angeordnet sind.

Die an den Trägern angebauten Folienführungselemente können beispielsweise gelagerte Laufrollen mit unterschiedlichen wärmeisolierenden oder antiadhäsiven Ummantelungen oder Beschichtungen sein. Es kann auch vorgesehen sein, dass der gesamte Laufrollenmantel aus einem wärmeisolierenden Werkstoff besteht, beispielsweise Kohlefaser. Die Folienführungselemente können auch starre Stangen mit einer Gleitbeschichtung sein (gerade oder zum Folienschlauch hin leicht gekrümmt). Die Folienführungselemente können auch starre Rundstangen sein, auf denen mehrere kurze ringförmige Körper aus einem wärmeisolierenden Werkstoff drehbar aufgereiht sind. Für eine berührungslose, absolut markierungsfreie Folienführung können die Folienführungselemente starre Balken sein (gerade oder zur Folienblase hin leicht gekrümmt), die ein Luftpolster bilden, welches den Folienschlauch ohne direkten Bauteilkontakt berührungslos führt.

In einem Ausführungsbeispiel weisen die Träger jeweils zwei, beispielsweise länglich ausgebildete, Folienführungselemente, zum Beispiel in Form von Laufrollen oder Luftbalken, auf, die in Produktionsrichtung voneinander beabstandet und V-förmig überlappend angeordnet sind. Bei der Verwendung von Laufrollen oder ähnlichen berührenden Folienführungselementen, wie oben beschrieben, werden diese in Anlage zum Folienschlauch gehalten. Bei der Verwendung von Luftbalken werden diese so nah an dem Folienschlauch gehalten, dass diese den Folienschlauch durch den Venturi- bzw. Bernoulli-Effekt halten können. Da die beiden V-förmig zueinander angeordneten Folienführungselemente simultan durch eine der Verstelleinheiten bewegt werden, ist eine besonders präzise zentrische Ausrichtung der Folienführungselemente gegenüber dem Folienschlauch erforderlich, damit beide Folienführungselemente gleichmäßig in Anlage zum Folienschlauch oder nahe zu dieser gehalten sind.

Bei allen vorher beschriebenen Ausführungsformen können die Schwenkarme in einer beispielhaften Bauform als zugeschnittene Formbleche mit stabilisierenden Aufkantungen ausgeführt sein. Entsprechend der Belastung wird dabei eine nach vorne zum Träger der Folienführungselemente abnehmende Querschnittshöhe gewählt.

Bei allen vorher beschriebenen Ausführungsformen können zwischen, unterhalb oder oberhalb von Folienführungselementen Kühlgasabsaugelemente angebaut sein, die an den Verstelleinheiten angeordnet sind. Diese Kühlgasabsaugelemente sind vorzugsweise rohrförmig mit rundem oder eckigem Querschnitt oder als Blechgehäusekonstruktion ausgeführt und weisen vorzugsweise an ihrer inneren Kontur und/oder Unterseite eine oder mehrere Öffnungen zum Absaugen von Kühlgas auf, welches aus dem Kühlprozess in Produktionsrichtung entlang des Folienschlauchs strömt und mit öligen oder wachsartigen Monomeren belastet ist, die aus der heißen Schmelze ausgasen.

Die innere Kontur der Kühlgasabsaugelemente kann gerade oder zur Schlauchfolie hin leicht gekrümmt ausgeführt sein, wobei der Krümmungsradius in etwa dem größten Radius der Schlauchfolie entspricht. Diese Krümmung kann auch durch mehrere Geradenabschnitte und entsprechende Knickwinkel angenähert sein. Die Kühlgasabsaugelemente sind vorzugsweise wie die Folienführungselemente am beischwenkbaren Träger angebaut und werden bei Verstellung des Durchmessers der Kalibrier- und Führungsvorrichtung zusammen mit den Folienführungselementen relativ zur Schlauchfolienblase bewegt. Damit ist für alle Durchmesser eine effektive Funktion der Kühlgasabsaugelemente gegeben.

Die Wegführung des abgesaugten Kühlgases erfolgt über Schlauch- und Rohrleitungen über ein zentrales Absauggebläse. Ein partielles oder vollständiges Absaugen des belasteten Kühlgases oberhalb der Einfriergrenze im Bereich der Kalibrier- und Führungsvorrichtung verhindert bzw. reduziert eine Verschmutzung der nachfolgenden Anlagenkomponenten durch Ablagerung von Monomeren.

Um auch die Kalibriervorrichtung selbst sauber zu halten, werden die Kühlgasabsaugelemente sinnvollerweise im unteren Bereich der Kalibrier- und Führungsvorrichtung angeordnet. Entsprechende Vorrichtungen zur Absaugung von Kühlgas sind nach dem Stand der Technik bekannt (beispielsweise nach EP 1 491 319 B1). Ausführungsbeispiele von Vorrichtungen zum Führen eines aus einem Folienblaskopf austretenden, in einer Produktionsrichtung abgezogenen Folienschlauchs werden im Folgenden anhand der Figuren näher erläutert. Hierin zeigen:
- Figur 1: eine Gesamtansicht einer Folienblasanlage,
- Figur 2: eine Draufsicht einer erste Ausführungsform einer Kalibrier- und Führungsvorrichtung,
- Figur 3: eine Draufsicht der Kalibrier- und Führungsvorrichtung gemäß Figur 2, wobei der Folienschlauch einen gegenüber der Darstellung gemäß Figur 2 kleineren Durchmesser aufweist,
- Figur 4: eine Draufsicht einer zweiten Ausführungsform einer Kalibrier- und Führungsvorrichtung,
- Figur 5: eine Draufsicht einer dritten Ausführungsform einer Kalibrier- und Führungsvorrichtung,
- Figur 6: eine Teildraufsicht der Kalibrier- und Führungsvorrichtung gemäß Figur 5 im Bereich einer der Verstelleinheiten, wobei der Träger und die Koppelstange der Verstelleinheit in verschiedenen Schwenkpositionen dargestellt sind,
- Figur 7: eine Draufsicht einer vierten Ausführungsform einer Kalibrier- und Führungsvorrichtung,
- Figur 8: eine Draufsicht einer fünften Ausführungsform einer Kalibrier- und Führungsvorrichtung,
- Figur 9: eine Draufsicht einer sechsten Ausführungsform einer Kalibrier- und Führungsvorrichtung, und
- Figur 10: eine perspektivische Darstellung der Kalibrier- und Führungsvorrichtung gemäß der ersten Ausführungsform in Produktionsrichtung schräg von unten.

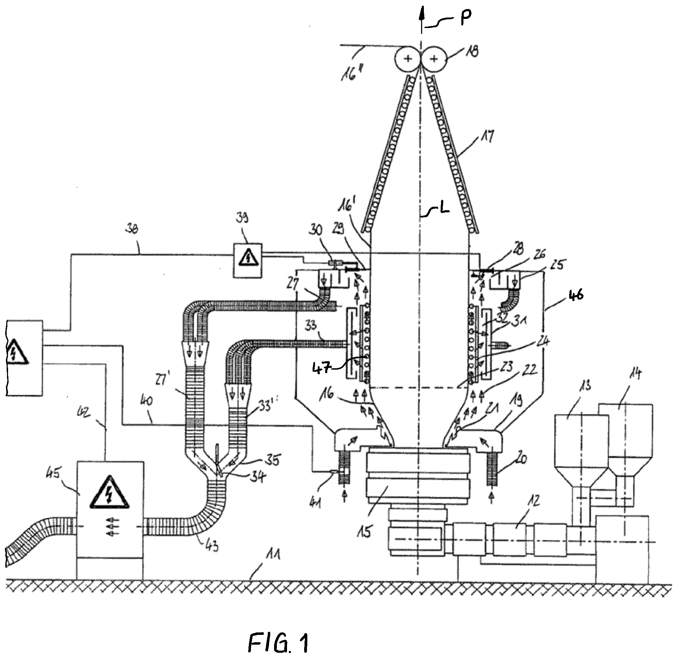

In Figur 1 ist in Seitenansicht und teilweise im Längsschnitt durch eine Längsachse eines Blasfolienschlauches eine Folienblasanlage zur Herstellung des Folienschlauchs gezeigt. Auf einem Maschinenfundament 11 steht ein Extruder 12, an dem zwei Aufgabetrichter 13, 14 für thermoplastisches Kunststoffmaterial zu erkennen sind. In Granulatform über die Trichter 13, 14 aufgegebenes thermoplastisches Kunststoffmaterial wird durch Druck und zusätzliche Heizmittel in einer Schnecke des Extruders 12 plastifiziert und homogenisiert und in einen sich an den Extruder anschließenden Blaskopf 15 mit vertikaler Achse gedrückt. Der Blaskopf 15 hat auf einer Oberseite eine nicht im Einzelnen gezeigt Ringdüse, aus der ein sich erweiternder achssymmetrischer Folienschlauch 16 aus zunächst noch plastifiziertem Folienmaterial austritt. Nach Erstarrung des Folienmaterial behält der Folienschlauch 16' seinen Durchmesser im Wesentlichen bei. Der Folienschlauch 16' wird in einer Flachlegevorrichtung 17 flach gedrückt und über ein Abziehwerk 18 nach oben abgezogen. Der flachgedrückte Folienschlauch 16" wird anschließend auf Coils aufgewickelt. In Richtung vom Blaskopf 15 zum Abziehwerk 18 werden die funktionellen Begriffe "vor" und "stromab von" derart verwendet, dass sie in räumlicher Beziehung "unter" und "oberhalb von" bedeuten.

Unmittelbar über dem Blaskopf 15 ist ein Kühlgasring 19 mit mehreren Gaszuleitungen 20 gezeigt. Der Kühlgasring 19 hat innenliegende Austrittsdüsen 21, aus denen das Kühlgas ausströmt und den Folienschlauch 16, der unter erhöhtem Innendruck steht, ringförmig im Wesentlichen wandparallel anströmt. Die Kühlgasströmung ist mit Pfeilen 22 symbolisiert. Der in diesem Bereich plastifizierte Folienschlauch 16 erweitert sich zunächst im Durchmesser unter dem genannten Überdruck im Inneren, bis er unter der Wirkung des Kühlgases erhärtet und konstanten Durchmesser annimmt. Der Ort des Übergangs vom plastifizierten Material zum erhärteten Material wird "Einfriergrenze" genannt und ist mit 23 bezeichnet.

Oberhalb, d. h. in Abzugsrichtung stromab von der Einfriergrenze 23, befindet sich eine Kalibrier- und Führungsvorrichtung 24, die Folienführungselemente 47 mit übereinanderliegenden Laufrollenanordnungen enthält, die sich im Wesentlichen ringförmig um den Folienschlauch 16' legen. Um eine Anpassung an Folienschläuche unterschiedlichen Durchmessers zu ermöglichen, befinden sich hierbei die Laufrollenanordnungen in der Regel auf einzelnen Teilumfänge bildenden schwenkbaren Segmenten, mittels derer der Durchmesser der Kalibriervorrichtung verändert werden kann. Im Querschnitt können diese Segmente vereinfacht eine polygonförmige Kalibriervorrichtung bilden. Der noch relativ warme Folienschlauch 16' wird durch die Kalibrier- und Führungsvorrichtung 24 im Querschnitt stabilisiert und bezüglich des Einlaufs in die Flachlegeeinrichtung 17 zentriert. Die Kalibrier- und Führungsvorrichtung 24 kann relativ zum Blaskopf 15 höhenverstellbar angeordnet sein, um stets eine optimale Höhenposition relativ zur Einfriergrenze einnehmen zu können.

Stromab von der Kalibrier- und Führungsvorrichtung 24 befindet sich ein Gasabsaugring 25 mit innenliegenden ringförmigen Ansaugöffnungen 26, der das mit Ausgasungen aus dem Folienschlauch belastete Kühlgas absaugen kann. An den Gasabsaugring 25 sind umfangsverteilt Absaugleitungen 27 angeschlossen. Das mit Ausgasungen belastete Kühlgas ist durch Pfeile 28 symbolisiert. Unmittelbar stromab vom Gasabsaugring 25 und mechanisch mit diesem verbunden liegt eine verstellbare Blende 29, die den Folienschlauch 16' abdichtend umschließt. Die Blende 29 ist über eine Verstellvorrichtung 30 im Öffnungsquerschnitt verstellbar und damit an verschiedene Durchmesser des Folienschlauchs 16' anpassbar. Durch das Abdichten des Folienschlauches oberhalb des Gasabsaugrings 25 wird verhindert, dass Reinluft aus einem Bereich stromab vom Gasabsaugring angesaugt wird, so dass die Absaugung des belasteten Kühlgases bei geringem Energieeinsatz optimiert ist.

Im Bereich der Kalibrier- und Führungsvorrichtung 24 befindet sich alternativ oder zusätzlich radial außerhalb der Kalibrier- und Führungsvorrichtung ein weiterer Gasabsaugring oder eine Mehrzahl von einzelnen Gasabsaugtrichtern oder, wie beispielsweise gezeigt, Gasabsaugbalken 31, die mit einer Mehrzahl von über dem Umfang verteilten Absaugleitungen 33 verbunden sind. Hierbei kann zumindest ein Gasabsaugbalken oder mehrere übereinander angeordnete Gasabsaugbalken einem der zuvor genannten Segmente der Kalibriervorrichtung zugeordnet sein, so dass mit einer Anpassung der Kalibriervorrichtung an unterschiedliche Durchmesser des Folienschlauches 16' zugleich eine Anpassung der zusätzlichen Absaugvorrichtung an die unterschiedlichen Durchmesser erfolgen kann. Die Mehrzahl der Absaugleitungen 27 wird zunächst zu einer Leitung 27' zusammengeführt. Ebenso wird die Mehrzahl der Absaugleitungen 33 zu einer einzigen Leitung 33' zusammengeführt. Die Leitungen 27' und 33' werden dann zu einer einzigen Gasabsaugleitung 43 vereint, wobei eine Regelklappe 34 im Bereich eines Rohres 35 angeordnet ist. Bei Ausführungen ohne den oberen Gasabsaugring 25 entfällt die Zusammenführung und die Regelklappe 34, und die Leitung 33' geht unmittelbar in die Gasabsaugleitung 43 über. An die Absaugleitung 43 schließt sich ein Sauggebläse 44 an. In der Absaugleitung 43 kann vor oder nach dem Sauggebläse 44 ein Filter, beispielsweise ein Elektrofilter 45 integriert sein, wenn es aus Umweltschutzgründen unmöglich ist, die Absauggase in die Umgebung außerhalb einer Produktionshalle abzublasen. Anstelle des Elektrofilters 45 kann auch ein Kondensatabscheider vorgesehen sein, der strömungsmechanisch und/oder durch Abkühlung der Absauggase die darin enthaltenen belastenden Ausgasungen des Folienschlauchs abscheidet.

Ein Steuergerät 36 mit Prozessor steuert über eine Steuerleitung 37 das Absauggebläse 44 sowie über eine Steuerleitung 38 ein weiteres Steuergerät 39 zur Ansteuerung der Verstellvorrichtung 30 für die Blende 29. Über eine Messleitung 40 werden die Signale eines Kühlgasmengenstromsensors 41 in den Kühlluftzuführungsleitungen 20 an das Steuergerät 36 übermittelt. Über eine Messleitung 42 werden Signale über die Druck- bzw. Mengenstromverhältnisse am Elektrofilter 45 zum Steuergerät 36 übermittelt. Das Steuergerät 36 kann über eine weitere Steuerleitung, die hier nicht dargestellt ist, auch das ebenfalls nicht dargestellte Kühlgasgebläse prozessorgesteuert regeln. Der gesamte Bereich vom ersten Kühlgasring 19 bis zum Gasabsaugring 25 ist von einer Einhausung 46 eingeschlossen, so dass das mit Ausgasungen belastete Kühlgas vom Arbeitsplatz des Bedienpersonals ferngehalten wird. Die Leitungen 27, 33 sind abgedichtet durch die Einhausung hindurchgeführt.

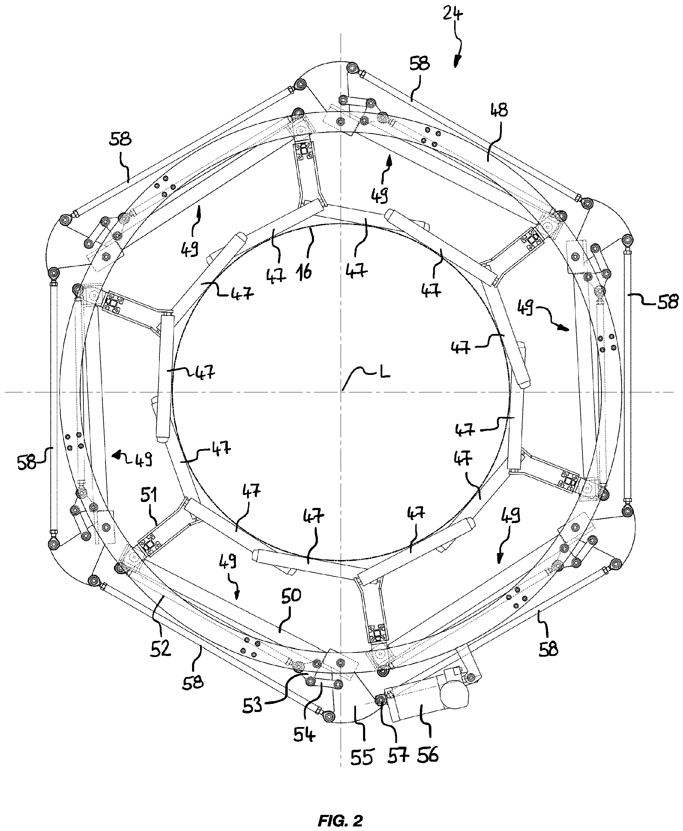

Figur 2 zeigt eine Draufsicht auf eine erste Ausführungsform einer Vorrichtung zum Führen eines aus einem Folienblaskopf austretenden, in einer Produktionsrichtung abgezogenen Folienschlauchs 16 (Kalibrier- und Führungsvorrichtung 24). Die Kalibrier- und Führungsvorrichtung 24 weist einen Rahmen 48 auf, an dem die nachfolgend beschriebenen beweglichen Elemente befestigt sind und der gegebenenfalls relativ zum Blaskopf höhenverstellbar angeordnet ist. Der Rahmen 48 bildet einen zentralen Durchgang, durch den der Folienschlauch 16 parallel zur Längsachse L bzw. in Richtung der Produktionsrichtung P gemäß Figur 1 hindurchgeführt ist. Über den Umfang sind 6 Verstelleinheiten 49 verteilt angeordnet. Die Verstelleinheiten 49 dienen zum Verstellen von Folienführungselementen 47 in einer Richtung radial zur Längsachse L.

Die Verstelleinheiten 49 weisen jeweils einen Schwenkarm 50 auf, der am Rahmen 48 schwenkbar befestigt ist. Der Schwenkarm 50 ist hierbei um eine Schwenkachse schwenkbar, die parallel zur Längsachse L angeordnet ist.

Ferner weisen die Verstelleinheiten 49 jeweils einen Träger 51 auf, der in dem gezeigten Ausführungsbeispiel zwei Folienführungselemente 47 in Form von Laufrollen trägt, die in Produktionsrichtung voneinander beabstandet und V-förmig überlappend angeordnet sind. Der Träger 51 ist schwenkbar mit dem Schwenkarm 50 verbunden. Der Träger 51 ist hierbei um eine Schwenkachse schwenkbar mit dem Schwenkarm 50 verbunden, die parallel zur Längsachse L angeordnet ist.

Ferner weisen die Verstelleinheiten 49 jeweils eine Koppelstange 52 auf, die mit dem Träger 51 schwenkbar verbunden ist.

Letztendlich weisen die Verstelleinheiten 49 jeweils einen Stellmechanismus auf, mittels dessen die Koppelstange 52 gelenkig mit dem Rahmen 48 verbunden ist. In der in Figur 2 dargestellten Ausführungsform umfasst der Stellmechanismus ein Koppelelement 53 sowie einen Verbindungshebel 54. Das Koppelelement 53 ist mit dem Rahmen 48, mit der Koppelstange 52 und mit dem Verbindungshebel 54 gelenkig verbunden. In dem gezeigten Ausführungsbeispiel ist das Koppelelement 53 jeweils schwenkbar mit dem Rahmen 48, der Koppelstange 52 und dem Verbindungshebel 54 verbunden.

Der Verbindungshebel 54 ist zudem mit dem Schwenkarm 50 schwenkbar verbunden. In dem gezeigten Ausführungsbeispiel ist der Schwenkarm 50 fest mit einer Schwenkplatte 55 verbunden, welche auf einer vom Träger 51 abgewandten Seite der Schwenkachse, um die der Schwenkarm 50 am Rahmen 48 schwenkbar befestigt ist, angeordnet ist. Der Verbindungshebel 54 ist mit der Schwenkplatte 55 unmittelbar schwenkbar verbunden. Der Verbindungshebel 54 ist somit über die Schwenkplatte 55 mit dem Schwenkarm 50 schwenkbar verbunden.

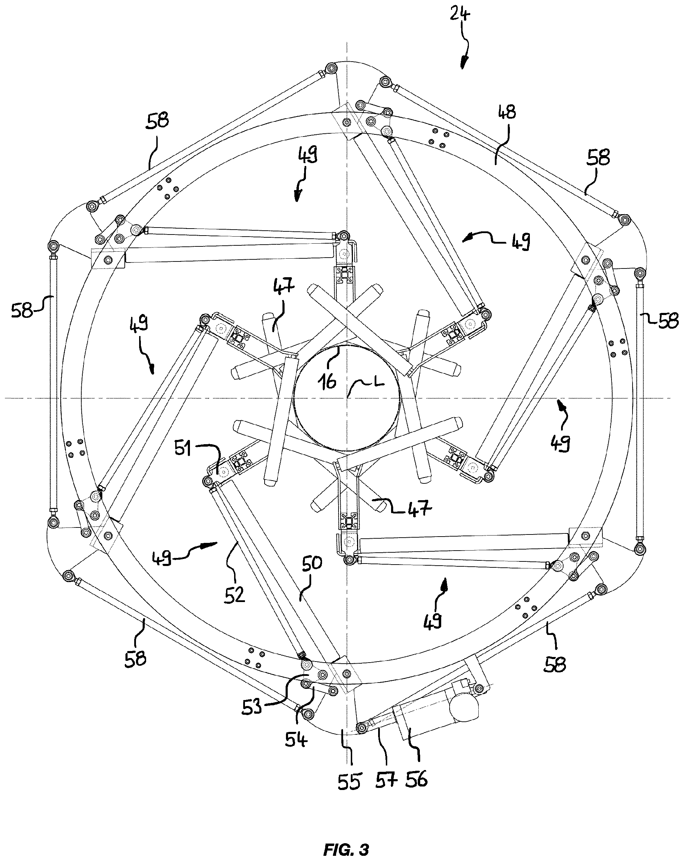

An dem Rahmen 48 ist zudem ein Antrieb 56 befestigt. Der Antrieb 56 ist in Form eines Solenoids ausgebildet, mit dem ein Aktor 57 in Form einer Kolbenstange linear antreibbar ist. Hierbei ist der Aktor 57 mit der Schwenkplatte 55 einer der Verstelleinheiten 49 schwenkbar verbunden. Ferner ist ein Gehäuse des Antriebs 56 mit dem Rahmen 48 schwenkbar verbunden. Der Antrieb 56 stützt sich somit gegen den Rahmen 48 ab, wobei durch Verstellen des Aktors 57 der Schwenkarm 50 verschwenkt werden kann. Wird der Aktor 57 von der in Figur 2 dargestellten eingeschobenen Position in die in Figur 3 dargestellte ausgeschobene Position überführt, wird der Schwenkarm 50, der mit dem Antrieb 56 verbunden ist, nach innen geschwenkt, sodass die Folienführungselemente 47 einen geringeren Durchmesser umschließen und somit einen Folienschlauch 16 mit kleinerem Durchmesser führen können.

Die Kalibrier- und Führungsvorrichtung 24 weist einen Synchronisationsmechanismus auf, um die Bewegung aller Verstelleinheiten 49 zu synchronisieren. Der Synchronisationsmechanismus weist Schubstangen 58 auf, die jeweils die Schwenkplatte 55 über den Umfang benachbarter Verstelleinheiten 49 miteinander koppeln. Hierzu sind die Schubstangen 58 jeweils mit den beiden Schwenkplatte 55 benachbarter Verstelleinheiten 49 schwenkbar verbunden. Somit wird die Schwenkbewegung derjenigen Verstelleinheit 49, die mit dem Antrieb 56 über die Schwenkplatte 55 verbunden ist, auf die übrigen Verstelleinheiten 49, die nicht unmittelbar mit dem Antrieb 56 verbunden sind, übertragen, sodass alle Verstelleinheiten 49 synchron bewegt werden.

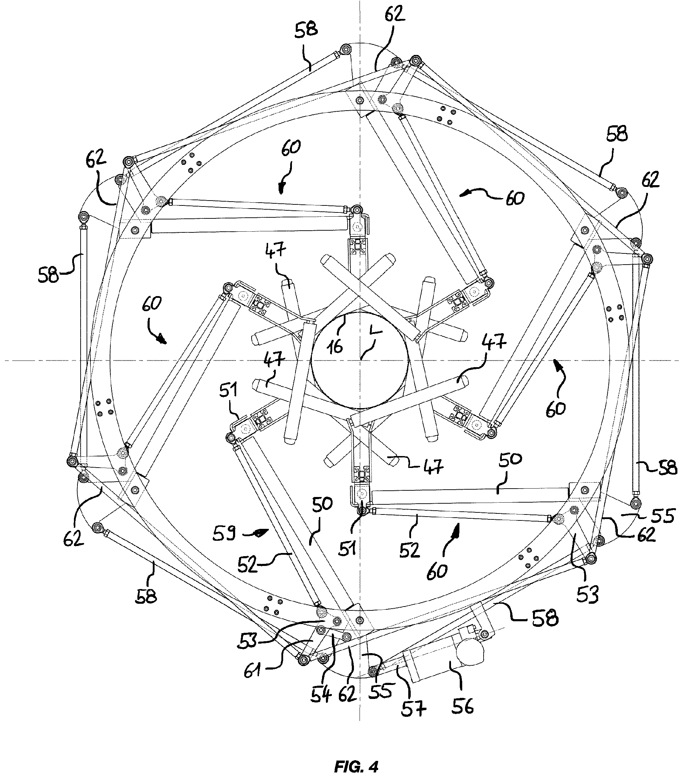

Figur 4 zeigt eine zweite Ausführungsform einer Kalibrier- und Führungsvorrichtung 24, wobei Bauteile, die mit Bauteilen der ersten Ausführungsform übereinstimmen, mit denselben Bezugszeichen versehen sind und dort beschrieben sind.

Die Kalibrier- und Führungsvorrichtung 24 gemäß der zweiten Ausführungsform weist eine erste Verstelleinheit 59 und fünf zweite Verstelleinheiten 60 auf. Die erste Verstelleinheit 59 ist hinsichtlich ihrer Funktion und Kinematik identisch zu den Verstelleinheiten der Kalibrier- und Führungsvorrichtung gemäß der ersten Ausführungsform. Im Unterschied hierzu weist das Koppelelement 53 einen Hebelarm 61 auf, der sich bezogen auf eine Schwenkachse zwischen dem Koppelelement 53 und dem Verbindungshebel 54 auf einer von der Koppelstange 52 abgewandten Seite befindet. Der Hebelarm 61 ist hierbei integraler Bestandteil des Koppelelements 53.

Die Koppelelemente 53 der zweiten Verstelleinheiten 60 sind vergleichbar zu dem Koppelelement 53 der ersten Verstelleinheit 59 ausgebildet. Im Unterschied zu der ersten Verstelleinheit 59 weisen die zweiten Verstelleinheiten 60 keinen Verbindungshebel 54 auf.

Zur Synchronisierung der Bewegung der Schwenkarme 50 ist ein erster Synchronisationsmechanismus vorgesehen, der identisch zu dem Synchronisationsmechanismus der ersten Ausführungsform der Kalibrier- und Führungsvorrichtung ist. Darüber hinaus ist ein zweiter Synchronisationsmechanismus vorgesehen, der Schubstangen 62 aufweist, mittels derer die Koppelelemente 53 zweier über den Umfang benachbarter Verstelleinheiten 59, 60 miteinander gekoppelt werden. Alle Verstelleinheiten 59, 60 sind paarweise über den Umfang miteinander gekoppelt, sodass die Schwenkbewegung des Koppelelement 53 der ersten Verstelleinheit 59 auf alle zweiten Verstelleinheiten 60 synchron übertragen wird.

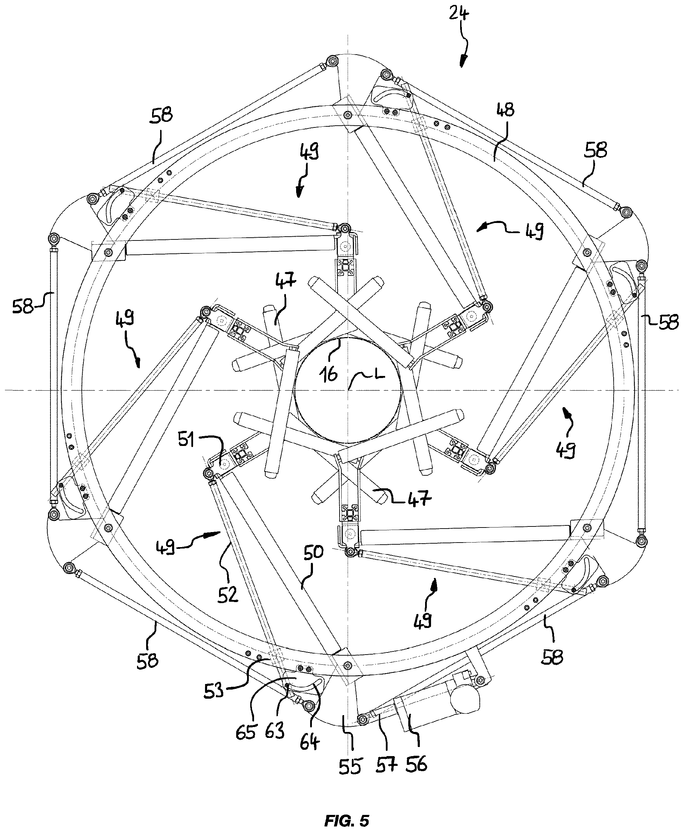

Figur 5 zeigt eine dritte Ausführungsform einer Kalibrier- und Führungsvorrichtung 24, wobei Bauteile, die mit Bauteilen der ersten Ausführungsform übereinstimmen, mit denselben Bezugszeichen versehen sind und dort beschrieben sind.

Im Unterschied zur ersten Ausführungsform sind die Koppelstange 52 der Verstelleinheiten 49 jeweils über das Koppelelement 53 drehgelenkig und verschiebbar mit dem Rahmen 48 verbunden. Das Koppelelement 53 ist drehbar mit dem Rahmen 48 verbunden. Die Koppelstange 52 ist verschiebbar mit dem Koppelelement 53 gekoppelt.

Darüber hinaus ist jeweils an der Koppelstange 52 ein Mitnehmer 63 befestigt, der entlang einer Führung 64 am Rahmen 48 translatorisch bewegbar geführt ist. Die Führung 64 ist in dem gezeigten Ausführungsbeispiel eine Nut in einer Platte 65, die fest am Rahmen 48 befestigt ist. Es sind jedoch auch andere Führungssysteme denkbar. Die Führung 64 ist kurvenförmig gestaltet und derart angepasst, dass der Träger 51 stets zentrisch zur Längsachse L ausgerichtet ist, unabhängig vom Abstand zur Längsachse L bzw. zum Folienschlauch 16. Hierdurch wird eine präzise zentrische Ausrichtung der Folienführungselemente 47 in Form der beiden Laufrollen relativ zum Folienschlauch 16 gewährleistet, damit stets beide Laufrollen in Anlage zum Folienschlauch 16 gehalten sind.

Das Koppelelement 53, der Mitnehmer 63 und die Führung 64 bilden zusammen den Stellmechanismus, über den die Koppelstange 52 mit dem Rahmen 48 verbunden ist.

In der in Figur 5 gezeigten dritten Ausführungsform befindet sich der Mitnehmer 63 an der Koppelstange 52 und die Führung 64 am Rahmen 48. Diese Anordnung kann auch umgekehrt vorgesehen sein, d. h. der Mitnehmer 63 kann an dem Rahmen 48 befestigt sein und die Führung 64 an der Koppelstange 52.

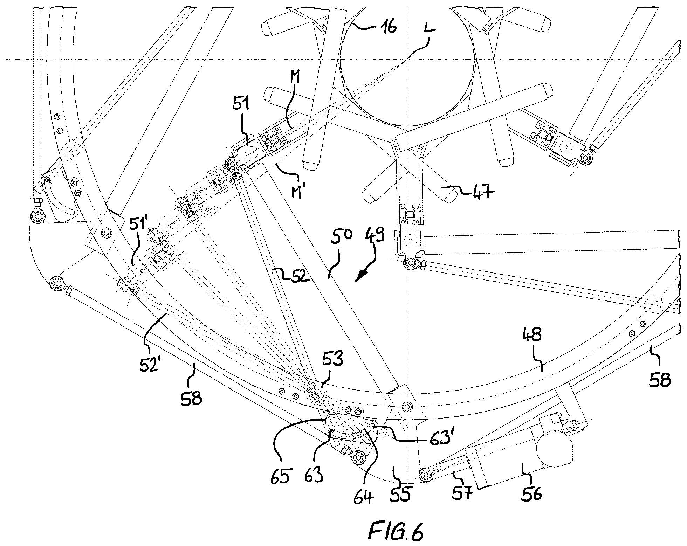

Figur 6 zeigt eine Teildraufsicht der Kalibrier- und Führungsvorrichtung der dritten Ausführungsform gemäß Figur 5 im Bereich einer der Verstelleinheiten 49, wobei der Träger 51 und die Koppelstange 52 der Verstelleinheit 49 in verschiedenen Schwenkpositionen dargestellt ist. In einer maximal nach innen geschwenkten Schwenkposition, in der ein kleinster Durchmesser für den Folienschlauch 16 freigegeben wird, sind die Bauteile mit durchgezogenen Linien dargestellt. In von der maximal nach innen geschwenkten Schwenkpositionen abweichenden Schwenkpositionen sind die Bauteile mit strichpunktierten Linien dargestellt.

Der Träger 51 bildet in einer Ebene quer zur Längsachse L eine Mittelachse M, die unabhängig von der Schwenkposition der Verstelleinheit 49 durch die Mittelachse der Schlauchfolie bzw. durch die Längsachse L verläuft bzw. diese schneidet. In dem gezeigten Ausführungsbeispiel ist die Mittelachse M derart angeordnet, dass sie eine Schwenkachse, um die der Träger 51 schwenkbar mit dem Schwenkarm 50 verbunden ist, und eine weitere Schwenkachse, um die die Koppelstange 52 schwenkbar mit dem Träger 51 verbunden ist, verläuft. In Figur 6 ist erkennbar, dass unabhängig von der Schwenkposition die Mittelachse M, M' stets durch die Längsachse L verläuft, wobei in der maximal nach außen geschwenkten Schwenkposition der Träger mit dem Bezugszeichen 51' und die Mittelachse mit dem Bezugszeichen M' versehen ist.

Darüber hinaus ist zu erkennen, wie der Mitnehmer 63 innerhalb der Führung 64 geführt ist. In der maximal nach innen geschwenkten Schwenkposition ist der Mitnehmer mit dem Bezugszeichen 63 und in der maximal nach außen geschwenkten Schwenkposition mit dem Bezugszeichen 63' versehen.

Ferner ist der sich über die Schwenkposition verändernde Abstand zwischen dem Koppelelement 53 und die Mitnehmer 63 erkennbar. Dies ist darauf zurückzuführen, dass beim Schwenken des Schwenkarms 50 aus der maximal nach innen geschwenkten Schwenkposition in die maximal nach außen geschwenkten Schwenkposition die Koppelstange 52 nach außen durch das Koppelelement 53 geschoben wird. Daher ist der Abstand zwischen dem Koppelelement 53 und dem Mitnehmer 63 in der maximal nach innen geschwenkten Schwenkposition geringer als in der maximal nach außen geschwenkten Schwenkposition des Schwenkarms 50.

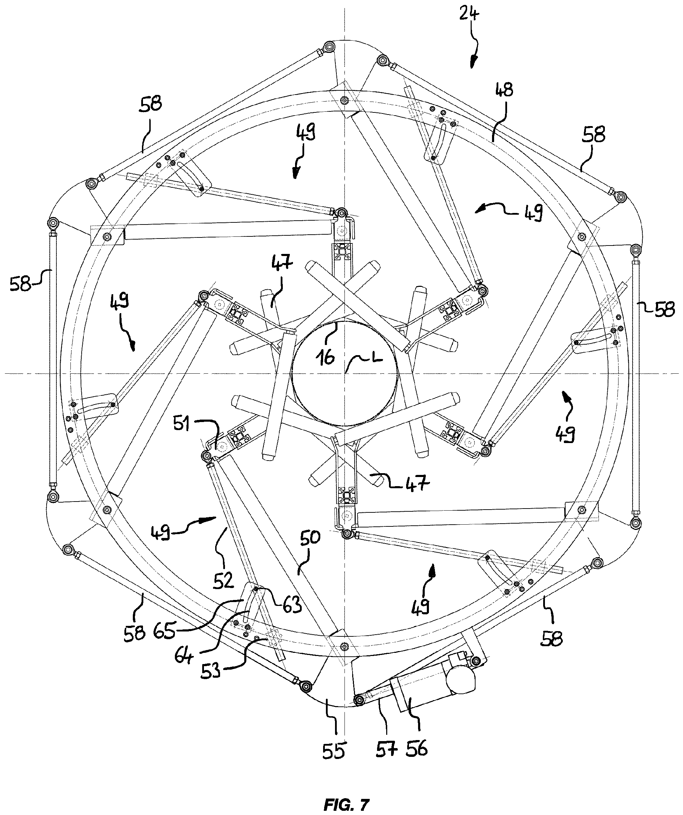

Bei der dritten Ausführungsform befindet sich der Mitnehmer 63 auf einer vom Träger 51 abgewandten Seite des Koppelelements 53. Wie bei der in Figur 7 gezeigten vierten Ausführungsform kann der Mitnehmer jedoch auch auf derselben Seite des Koppelelements 53 angeordnet sein, wie der Träger 51. Darüber hinaus ragt die Platte 65 mit der Führung 64 vom Rahmen 48 nach innen vor, und nicht, wie bei der dritten Ausführungsform gemäß Figur 5 nach außen. Im Übrigen entspricht die vierte Ausführungsform gemäß Figur 7 der dritten Ausführungsform gemäß Figur 5.

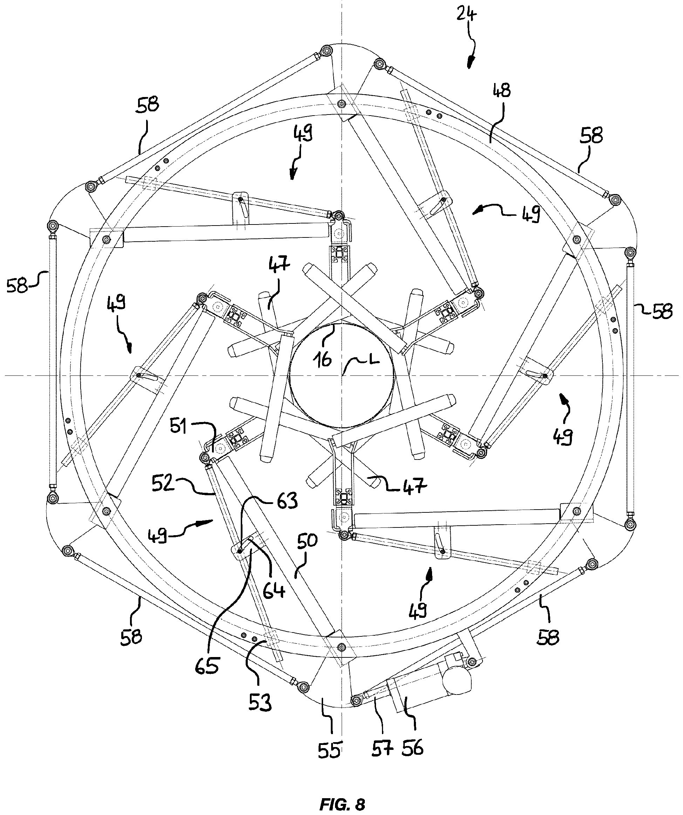

Figur 8 zeigt eine fünfte Ausführungsform einer Kalibrier- und Führungsvorrichtung 24, wobei Bauteile, die mit Bauteilen der dritten Ausführungsform gemäß Figur 5 übereinstimmen, mit denselben Bezugszeichen versehen sind und dort beschrieben sind.

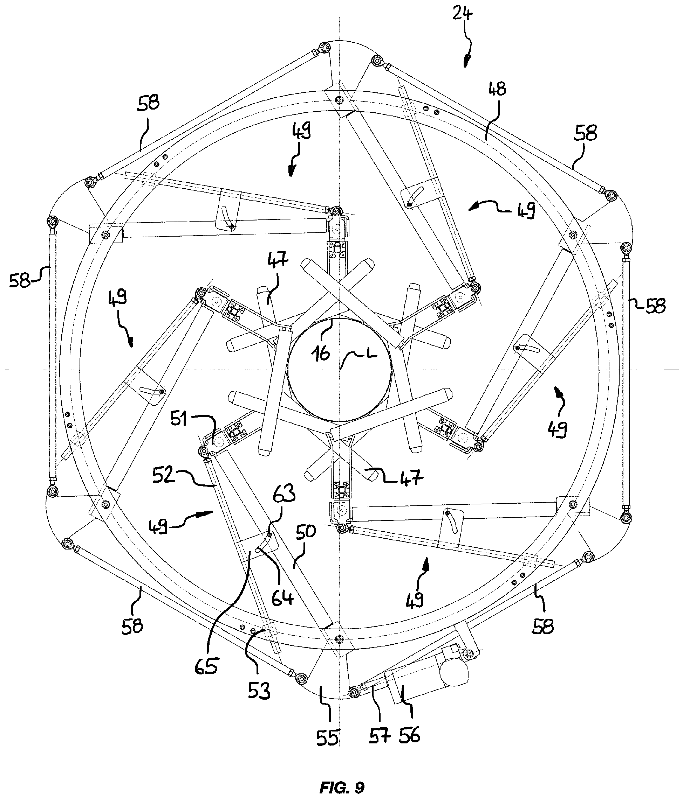

Im Unterschied zu der dritten Ausführungsform ist die Führung 64 bzw. die Platte 65 nicht am Rahmen 48 sondern am Schwenkarm 50 befestigt. Die Platte 65 steht auf der Seite des Schwenkarms 50 vor, die der Koppelstange 52 zugewandt ist. Der Mitnehmer 63, der an der Koppelstange 52 befestigt ist, ist entlang der Führung 64 verschiebbar. Auch hier kann die Anordnung umgekehrt vorgesehen sein, d. h. der Mitnehmer 63 kann auch an dem Schwenkarm 50 angeordnet sein und die Führung 64 bzw. die Platte 65 mit der Koppelstange 52 verbunden sein, wie dies in Figur 9 gemäß einer sechsten Ausführungsform gezeigt ist.

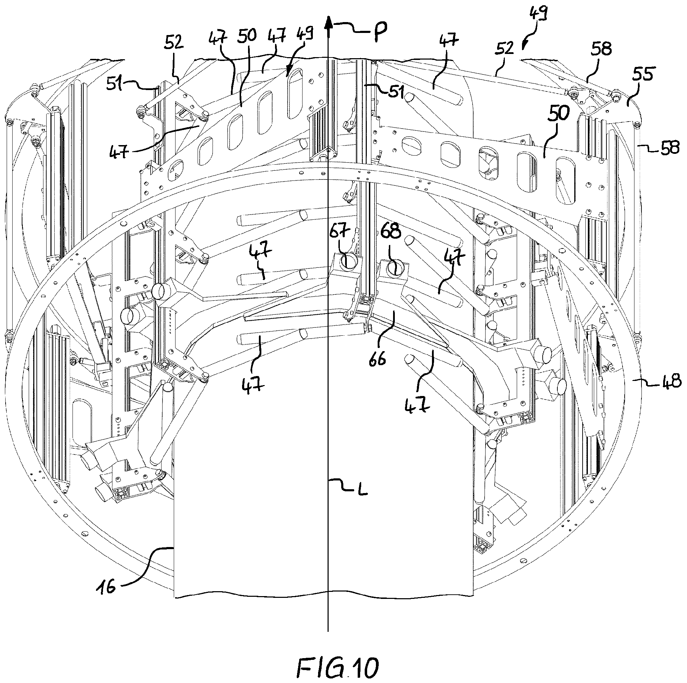

Figur 10 zeigt eine perspektivische Darstellung gemäß der ersten Ausführungsform der Kalibrier- und Führungsvorrichtung in Produktionsrichtung P schräg von unten. Hierbei ist an jedem Träger 51 der Verstelleinheiten 49 ein Kühlgasabsaugelement 66 befestigt. Die Kühlgasabsaugelemente 66 weisen jeweils zwei Absaugstutzen 67, 68 auf, die mit hier nicht dargestellten Absaugleitungen verbunden werden können. In dem gezeigten Ausführungsbeispiel sind die Kühlgasabsaugelemente 66 in Form von Blechgehäuse-Konstruktionen ausgebildet, die jeweils an ihrer Unterseite eine Öffnung zum Absaugen von Kühlgas aufweisen. An einer zur Schlauchfolie 16 weisenden Seite weisen die Kühlgasabsaugelemente 66 eine gekrümmte Kontur auf.

Die Kühlgasabsaugelemente 66 sind zwischen zwei untersten Paaren von Folienführungselementen 47 in Form von Laufrollen angeordnet, sodass alle darüber liegenden Folienführungselemente 47 mit möglichst geringen Anteilen an Ausgasungen aus dem Folienschlauch 16 in Berührung kommen.

### Bezugszeichenliste

- 11: Fundament
- 12: Extruder
- 13: Aufgabetrichter
- 14: Aufgabetrichter
- 15: Düsenkopf
- 16: Folienschlauch
- 17: Flachliegevorrichtung
- 18: Abziehwerk
- 19: Kühlgasring
- 20: Kühlgaszuführung
- 21: Kühlgasringdüse
- 22: Kühlgas (Pfeil)
- 23: Einfriergrenze
- 24: Kalibrier- und Führungsvorrichtung
- 25: Absaugring
- 26: Absaugringdüse
- 27: Gasabführung
- 28: Abgas (Pfeil)
- 29: Blende
- 30: Verstellvorrichtung
- 31: Gasabsaugbalken
- 32: Absaugschlitz
- 33: Gasabführung
- 34: Regelklappe
- 35: Rohr
- 36: Steuergerät
- 37: Steuerleitung
- 38: Steuerleitung
- 39: Steuergerät
- 40: Messleitung
- 41: Messfühler
- 42: Messleitung
- 43: Absaugleitung
- 44: Sauggebläse
- 45: Elektrofilter
- 46: Einhausung
- 47: Folienführungselemente
- 48: Rahmen
- 49: Verstelleinheit
- 50: Schwenkarm
- 51: Träger
- 52: Koppelstange
- 53: Koppelelement
- 54: Verbindungshebel
- 55: Schwenkplatte
- 56: Antrieb
- 57: Aktor
- 58: Schubstange
- 59: erste Verstelleinheit
- 60: zweite Verstelleinheit
- 61: Hebelarm
- 62: Schubstange
- 63: Mitnehmer
- 64: Führung
- 65: Platte
- 66: Kühlgasabsaugelement
- 67: Absaugstutzen
- 68: Absaugstutzen

- L: Längsachse
- M: Mittelachse
- P: Produktionsrichtung

## Patentansprüche

1. Vorrichtung zum Führen eines aus einem Folienblaskopf austretenden, in einer Produktionsrichtung abgezogenen Folienschlauchs, mit
einem Rahmen (48), durch den der Folienschlauch (16) in Produktionsrichtung (P) hindurchführbar ist, und
mehreren über den Umfang verteilt angeordnete Verstelleinheiten (49, 59, 60) zum Verstellen von Folienführungselementen (47) quer zur Produktionsrichtung (P), wobei die Verstelleinheiten (49, 59, 60) jeweils Folgendes aufweisen: einen Schwenkarm (50), der am Rahmen (48) schwenkbar befestigt ist, einen Träger (51) für zumindest eines der Folienführungselemente (47), wobei der Träger (51) mit dem Schwenkarm (50) schwenkbar verbunden ist, und eine Koppelstange (52), die mit dem Träger (51) schwenkbar verbunden ist,
**dadurch gekennzeichnet,**
**dass** zumindest eine erste Verstelleinheit (49, 59) der mehreren Verstelleinheiten einen Stellmechanismus (53, 54, 63, 64, 65) aufweist, mittels dessen die Koppelstange (52) der zumindest einen ersten Verstelleinheit (49, 59) gelenkig mit dem Rahmen (48) verbunden ist, und
**dass** die zumindest eine erste Verstelleinheit (49, 59) ein Koppelgetriebe oder ein Kurvengetriebe bildet.

2. Vorrichtung nach Anspruch 1,
**dadurch gekennzeichnet,**
**dass** der Stellmechanismus (53, 54, 63, 64, 65) mit dem Schwenkarm (50) der zumindest einen ersten Verstelleinheit (49, 59), mit der Koppelstange (52) der zumindest einen ersten Verstelleinheit (49, 59) und mit dem Rahmen (48) gelenkig gekoppelt ist.

3. Vorrichtung nach Anspruch 1 oder 2,
**dadurch gekennzeichnet,**
**dass** der Stellmechanismus ein Koppelelement (53) aufweist, das einerseits mit der Koppelstange (52) der zumindest einen ersten Verstelleinheit (49, 59) und andererseits mit dem Rahmen (48) jeweils gelenkig verbunden ist.

4. Vorrichtung nach Anspruch 3,
**dadurch gekennzeichnet,**
**dass** das Koppelelement (53) mit der Koppelstange (52) der zumindest einen ersten Verstelleinheit (49, 59) schwenkbar verbunden ist.

5. Vorrichtung nach Anspruch 3 oder 4,
**dadurch gekennzeichnet,**
**dass** der Stellmechanismus einen Verbindungshebel (54) aufweist, der einerseits mit dem Schwenkarm (50) und andererseits mit dem Koppelelement (53) der zumindest einen ersten Verstelleinheit (49, 59) schwenkbar verbunden ist.

6. Vorrichtung nach Anspruch 3,
**dadurch gekennzeichnet,**
**dass** das Koppelelement (53) einerseits mit der Koppelstange (52) der zumindest einen ersten Verstelleinheit (49) verschiebbar und andererseits mit dem Rahmen (48) schwenkbar verbunden ist.

7. Vorrichtung nach Anspruch 6,
**dadurch gekennzeichnet,**
**dass** der Stellmechanismus einen Kurvenführungsmechanismus mit einer Führung (64) und einem Mitnehmer (63) aufweist, wobei die Koppelstange (52) über den Kurvenführungsmechanismus mit dem Rahmen (48) oder dem Schwenkarm (50) gekoppelt ist und wobei der Mitnehmer (63) entlang der Führung (64) translatorisch bewegbar geführt ist.

8. Vorrichtung nach Anspruch 7,
**dadurch gekennzeichnet,**
**dass** der Mitnehmer (63) an einem Element der Gruppe bestehend aus der Koppelstange (52) und dem Rahmen (48) und die Führung (64) an dem anderen Element der Gruppe bestehend aus der Koppelstange (52) und dem Rahmen (48) angeordnet ist.

9. Vorrichtung nach Anspruch 7,
**dadurch gekennzeichnet,**
**dass** der Mitnehmer (63) an einem Element der Gruppe bestehend aus der Koppelstange (52) und dem Schwenkarm (50) und die Führung (64) an dem anderen Element der Gruppe bestehend aus der Koppelstange (52) und dem Schwenkarm (50) angeordnet ist.

10. Vorrichtung nach einem der Ansprüche 1 bis 9,
**dadurch gekennzeichnet,**
**dass** die Vorrichtung ferner einen Synchronisationsmechanismus aufweist, über den zur Synchronisation der Verstellbewegungen die Verstelleinheiten (49, 59, 60) miteinander gekoppelt sind.

11. Vorrichtung nach Anspruch 10,
**dadurch gekennzeichnet,**
**dass** der Synchronisationsmechanismus Schubstangen (58, 62) aufweist, über die die Verstelleinheiten (49, 59, 60) über den Umfang der Vorrichtung umlaufend miteinander gekoppelt sind.

12. Vorrichtung nach Anspruch 10 oder 11,
**dadurch gekennzeichnet,**
**dass** zumindest eine zweite Verstelleinheit (60) der mehreren Verstelleinheiten (49, 59, 60) ein Koppelelement (53) aufweist, das einerseits mit der Koppelstange (52) der zumindest einen zweiten Verstelleinheit (60) und andererseits mit dem Rahmen (48) gelenkig verbunden ist und im Übrigen frei von einer unmittelbaren Kopplung mit dem jeweiligen Schwenkarm (50) ist, und dass der Synchronisationsmechanismus Schubstangen (62) aufweist, über die die Koppelelemente (53) der ersten Verstelleinheiten (59) und der zweiten Verstelleinheiten (60) über den Umfang der Vorrichtung umlaufend miteinander gekoppelt sind.

13. Vorrichtung nach einem der Ansprüche 1 bis 12,
**dadurch gekennzeichnet,**
**dass** die Träger (51) jeweils zwei Folienführungselemente (47) aufweisen, die in Produktionsrichtung voneinander beabstandet und V-förmig überlappend angeordnet sind.

14. Vorrichtung nach einem der Ansprüche 1 bis 13,
**dadurch gekennzeichnet,**
**dass** die Vorrichtung ferner Kühlgasabsaugelemente (66) aufweist, die an den Verstelleinheiten (49, 50, 60) angeordnet sind.

15. Vorrichtung nach Anspruch 14,
**dadurch gekennzeichnet,**
**dass** die Kühlgasabsaugelemente (66) in Produktionsrichtung (P) vor oder zwischen den Folienführungselementen (47) angeordnet sind.

## Claims

1. Device for guiding a film tube emerging from a film blowing head and drawn off in a production direction, comprising
a frame (48) through which the film tube (16) can be passed in the production direction (P), and
a plurality of adjusting units (49, 59, 60) distributed over the circumference for adjusting film guide elements (47) transversely to the production direction (P), the adjusting units (49, 59, 60) each having the following:
a pivot arm (50), which is pivotally attached to the frame (48),
a carrier (51) for at least one of the film guide elements (47), the carrier (51) being pivotally connected to the pivot arm (50), and
a coupling rod (52) which is pivotably connected to the carrier (51),
**characterized in**
**that** at least one first adjusting unit (49, 59) of the plurality of adjusting units has an actuating mechanism (53, 54, 63, 64, 65) by means of which the coupling rod (52) of the at least one first adjusting unit (49, 59) is connected in an articulating manner to the frame (48), and
**that** the at least one first adjusting unit (49, 59) forms a coupler gear or a cam gear.

2. The apparatus according to claim 1,
**characterized in**
**that** the actuating mechanism (53, 54, 63, 64, 65) is coupled in an articulating manner to the pivot arm (50) of the at least one first adjusting unit (49, 59), to the coupling rod (52) of the at least one first adjusting unit (49, 59) and to the frame (48).

3. The apparatus according to claim 1 or 2,
**characterized in**
**that** the actuating mechanism has a coupling element (53) which is connected in an articulating manner, on the one hand, to the coupling rod (52) of the at least one first adjusting unit (49, 59) and, on the other hand, to the frame (48).

4. The apparatus according to claim 3,
**characterized in**
**that** the coupling element (53) is pivotably connected to the coupling rod (52) of the at least one first adjusting unit (49, 59).

5. The apparatus according to claim 3 or 4,
**characterized in**
**that** the actuating mechanism has a connecting lever (54) connected pivotably, on the one hand, to the pivot arm (50) and, on the other hand, to the coupling element (53) of the at least one first adjusting unit (49, 59).

6. The apparatus according to claim 3,
**characterized in**
**that** the coupling element (53) is connected, on the one hand, slidably to the coupling rod (52) of the at least one first adjusting unit (49) and, on the other hand, pivotably to the frame (48).

7. The apparatus according to claim 6,
**characterized in**
**that** the actuating mechanism has a cam guide mechanism with a guide (64) and a cam follower (63), the coupling rod (52) being coupled to the frame (48) or the pivot arm (50) via the cam guide mechanism, and the cam follower (63) being guided such that it can be moved translationally along the guide (64).

8. The apparatus according to claim 7,
**characterized in**
**that** the cam follower (63) is arranged on one element of the group comprising the coupling rod (52) and the frame (48) and the guide (64) is arranged on the other element of the group comprising the coupling rod (52) and the frame (48).

9. The apparatus according to claim 7,
**characterized in**
**that** the cam follower (63) is arranged on one element of the group comprising the coupling rod (52) and the pivot arm (50) and the guide (64) is arranged on the other element of the group comprising the coupling rod (52) and the pivot arm (50).

10. The apparatus according to one of claims 1 to 9,
**characterized in**
**that** the device further has a synchronization mechanism via which the adjusting units (49, 59, 60) are coupled to one another in order to synchronize the adjustment movements.

11. The apparatus according to claim 10,
**characterized in**
**that** the synchronization mechanism has push rods (58, 62) via which the adjusting units (49, 59, 60) are coupled to one another circumferentially over the circumference of the device.

12. The apparatus according to claim 10 or 11,
**characterized in**
**that** at least one second adjusting unit (60) of the plurality of adjusting units (49, 59, 60) has a coupling element (53) that is connected in an articulating manner, on the one hand, to the coupling rod (52) of the at least one second adjusting unit (60) and, on the other hand, to the frame (48) and, moreover, is free from direct coupling to the respective pivot arm (50), and
**that** the synchronization mechanism has push rods (62) via which the coupling elements (53) of the first adjusting units (59) and of the second adjusting units (60) are coupled to one another circumferentially over the circumference of the device.

13. The apparatus according to one of claims 1 to 12,
**characterized in**
**that** the carriers (51) each have two film guide elements (47) spaced apart from one another in the production direction and are arranged so as to overlap in a V-shape.

14. The apparatus according to one of claims 1 to 13,
**characterized in**
**that** the apparatus further comprises cooling gas exhaust elements (66) arranged on the adjusting units (49, 50, 60).

15. The apparatus according to claim 14,
**characterized in**
**that** the cooling gas exhaust elements (66) are arranged upstream of or between the film guide elements (47) in the production direction (P).

## Revendications

1. Dispositif, destiné à guider un film tubulaire sortant d'une tête de soufflage de film, retiré dans une direction de production, doté
d'un cadre (48), à travers lequel l'on peut faire passer le film tubulaire (16) dans la direction de production (P) et
de plusieurs unités d'ajustage (49, 59, 60), placées en distribution sur la périphérie, pour l'ajustage d'éléments de guidage (47) du film à la transversale de la direction de production (P), les unités d'ajustage (49, 59, 60) comportant chacune ce qui suit :
un bras pivotant (50), fixé de manière pivotante sur le cadre (48),
un support (51) pour au moins l'un des éléments de guidage (47) du film, le support (51) étant assemblé de manière à pouvoir pivoter avec le bras pivotant (50) et
une barre de couplage (52), qui est assemblée de manière à pouvoir pivoter avec le support (51),
**caractérisé**
**en ce qu'**au moins une première unité d'ajustage (49, 59) parmi les plusieurs unités d'ajustage comporte un mécanisme de réglage (53, 54, 63, 64, 65) au moyen duquel la barre de couplage (52) de l'au moins une première unité d'ajustage (49, 59) est assemblée de manière articulée avec le cadre (48) et
**en ce que** l'au moins une première unité d'ajustage (49, 59) constitue une transmission de couplage ou une transmission à cames.

2. Dispositif selon la revendication 1,
**caractérisé**
**en ce que** le mécanisme de réglage (53, 54, 63, 64, 65) est couplé de manière articulée avec le bras pivotant (50) de l'au moins une première unité d'ajustage (49, 59), avec la barre de couplage (52) de l'au moins une première unité d'ajustage (49, 59) et avec le cadre (48).

3. Dispositif selon la revendication 1 ou 2,
**caractérisé**
**en ce que** le mécanisme de réglage comporte un élément de couplage (53) qui est respectivement assemblé de manière articulée, d'une part avec la barre de couplage (52) de l'au moins une première unité d'ajustage (49, 59), d'autre part avec le cadre (48).

4. Dispositif selon la revendication 3,
**caractérisé**
**en ce que** l'élément de couplage (53) est assemblé de manière à pouvoir pivoter avec la barre de couplage (52) de l'au moins une première unité d'ajustage (49, 59).

5. Dispositif selon la revendication 3 ou 4,
**caractérisé**
**en ce que** le mécanisme de réglage comporte un levier d'assemblage (54) qui est assemblé de manière à pouvoir pivoter, d'une part avec le bras pivotant (50) et d'autre part avec l'élément de couplage (53) de l'au moins une première unité d'ajustage (49, 59).

6. Dispositif selon la revendication 3,
**caractérisé**
**en ce que** l'élément de couplage (53) est assemblé d'une part de manière déplaçable avec la barre de couplage (52) de l'au moins une première unité d'ajustage (49) et d'autre part, de manière à pouvoir pivoter avec le cadre (48).

7. Dispositif selon la revendication 6,
**caractérisé**
**en ce que** le mécanisme de réglage comporte un mécanisme de guidage à cames, pourvu d'un guidage (64) et d'un entraîneur (63), la barre de couplage (52) étant couplée par l'intermédiaire du mécanisme de guidage à cames avec le cadre (48) ou avec le bras pivotant (50) et l'entraîneur (63) étant guidé de manière déplaçable en translation le long du guidage (64).

8. Dispositif selon la revendication 7,
**caractérisé**
**en ce que** l'entraîneur (63) est placé sur un élément du groupe composé de la barre de couplage (52) et du cadre (48) et le guidage (64) est placé sur l'autre élément du groupe composé de la barre de couplage (52) et du cadre (48).

9. Dispositif selon la revendication 7,
**caractérisé**
**en ce que** l'entraîneur (63) est placé sur un élément du groupe composé de la barre de couplage (52) et du bras pivotant (50) et le guidage (64) est placé sur l'autre élément du groupe composé de la barre de couplage (52) et du bras pivotant (50).

10. Dispositif selon l'une quelconque des revendications 1 à 9,
**caractérisé**
**en ce que** le dispositif comporte par ailleurs un mécanisme de synchronisation, par l'intermédiaire duquel, pour la synchronisation des déplacements d'ajustage, les unités d'ajustage (49, 59, 60) sont couplées les unes avec les autres.

11. Dispositif selon la revendication 10,
**caractérisé**
**en ce que** le mécanisme de synchronisation comporte des bielles de poussée (58, 62), par l'intermédiaire desquelles les unités d'ajustage (49, 59, 60) sont couplées les unes avec les autres en circulation sur la périphérie du dispositif.

12. Dispositif selon la revendication 10 ou 11,
caractérisé
en es qu'au moins une deuxième unité d'ajustage (60) parmi les plusieurs unités d'ajustage (49, 59, 60) comporte un élément de couplage (53), qui est assemblé de manière à pouvoir pivoter, d'une part avec la barre de couplage (52) de l'au moins une deuxième unité d'ajustage (60) et d'autre part avec le cadre (48) et qui est par ailleurs exempt d'un couplage direct avec le bras pivotant (50) respectif et
en ce que le mécanisme de synchronisation comporte des bielles de poussée (62), par l'intermédiaire desquelles les éléments de couplage (53) des premières unités d'ajustage (59) et des deuxièmes unités d'ajustage (60) sont couplés les uns avec les autres en circulation sur la périphérie du dispositif.

13. Dispositif selon l'une quelconque des revendications 1 à 12,
**caractérisé**
**en ce que** les supports (51) comportent respectivement deux éléments de guidage (47) du film qui sont placés en étant espacés l'un de l'autre et en se chevauchant en forme de V dans la direction de production.

14. Dispositif selon l'une quelconque des revendications 1 à 13,
**caractérisé**
**en ce que** le dispositif comporte par ailleurs des éléments d'aspiration (66) de gaz de refroidissement qui sont placés sur les unités d'ajustage (49, 50, 60).

15. Dispositif selon la revendication 14,
**caractérisé**
**en ce que** les éléments d'aspiration (66) de gaz de refroidissement sont placés devant ou entre les éléments de guidage (47) du film dans la direction de production (P).
